# EUROPEAN PATENT SPECIFICATION

(11) **EP 4 650 324 B1**
(45) Date of publication and mention of the grant of the patent: **23.09.2026**
(21) Application number: 24919132.1
(22) Date of filing: 31.01.2024
(51) Int. Cl.: C08J 11/00, D06P 5/13, D06P 3/52, C02F 1/00, C02F 1/72, B01J 27/00, B01J 27/14, B01J 27/24, C08J 11/04

(54) **RECOVERY METHOD FOR POLYESTER FABRIC WASHING WASTE LIQUID**
RÜCKGEWINNUNGSVERFAHREN FÜR POLYESTERGEWEBEWASCHABFALLFLÜSSIGKEIT
PROCÉDÉ DE RÉCUPÉRATION DE LIQUIDE RÉSIDUAIRE DE LAVAGE DE TISSU EN POLYESTER

(43) Date of publication of application: 19.11.2025
(73) Proprietor: Jiangsu Jiocui Advanced Fiber Material Research Institute Co., Ltd., Nantong, Jiangsu 226000 (CN)
(72) Inventor: ZHOU, Jialiang, Nantong, Jiangsu 226000 (CN); WEI, Yanhong, Nantong, Jiangsu 226000 (CN); ZUO, Weiwei, Nantong, Jiangsu 226000 (CN); QU, Wenlin, Nantong, Jiangsu 226000 (CN); FAN, Yaoyao, Nantong, Jiangsu 226000 (CN); GU, Jiawei, Nantong, Jiangsu 226000 (CN); SHEN, Ziliang, Nantong, Jiangsu 226000 (CN)
(74) Representative: Dai, Simin
(86) International application number: PCT/CN2024/074951
(87) International publication number: WO 2025/160812

(56) References cited:
- WO-A1-2009/115376
- CN-A- 1 384 870
- CN-A- 102 061 005
- CN-A- 108 751 381
- US-A1- 2003 212 268
- US-A1- 2023 093 536

## Description

### TECHNICAL FIELD

The present disclosure generally relates to the field of recycling of waste fabric, and in particular, to a method for recovering an elution waste liquid of polyester fabric.

### BACKGROUND

With the rapid development of the fabric industry, the recycling of polyester fabric has gradually attracted social attention. Employing eluents to extract dyes from colored polyester fabric for decolorization is a key process in the recycling of polyester fabric. Since commonly employed polyester fabric dyes are azo dyes and anthraquinone dyes, the theoretical principle of current decolorization process for polyester fabric is to select eluents with similar chemical properties to the azo dyes and the anthraquinone dyes based on the principle of similar solubility parameters, similar polarity compatibility, or solvation, so that the dyes are separated from the polyester fabric and then fused with the eluent.

According to the above decolorization principle, after the colored polyester fabric is decolorized by the eluent, it is inevitable to generate an elution waste liquid of polyester fabric containing the azo dyes or the anthraquinone dyes. The azo dyes or the anthraquinone dyes still have dyeing ability. Therefore, if the elution waste liquid of polyester fabric is reused, it is easy to cause cross-dyeing, while direct discharge causes environmental pollution and waste of resources.

Therefore, it is urgent to provide a method for treating the elution waste liquid of polyester fabric to separate the azo or anthraquinone substances contained in the elution waste liquid of polyester fabric from the eluent, that is, the "purified" eluent is separated to achieve the reuse of the eluent.

US2023/093536A1 relates to the extraction of a dye from a polyester fabric. CN108751381A relates to the reduction of an azo dye.

### SUMMARY

In order to solve the above deficiencies in the prior art, the present disclosure provides a method for recovering an elution waste liquid of polyester fabric. Azo dyes or anthraquinone dyes extracted from the polyester fabric and dissolved in the elution waste liquid of polyester fabric are reacted with a catalyst to form a precipitate, so that the azo dyes or anthraquinone dyes are separated from an eluent, thereby realizing the purpose of recycling of the elution waste liquid of polyester fabric. To realize the above purpose, the technical solution employed in the present disclosure is as follows:

A method for recovering an elution waste liquid of polyester fabric, including mixing the elution waste liquid of polyester fabric with a catalyst, performing a dye curing reaction under a hydrogen atmosphere, and performing a separation operation to obtain a separated liquid, which is a polyester fabric eluent.

The catalyst is generated by an in-situ reaction of a metal salt compound with an organic ligand containing N or P.

The polyester fabric refers to waste polyester fabric. The fabric includes pre-consumer waste fabric (waste scraps, waste silk, waste yarn, waste blocks, etc.) and post-consumer old fabric (old clothing such as old clothes, old uniform, old school uniform, old work uniform, old home textile such as bed sheet and quilt cover, curtain, industrial textile, etc.), the polyester includes pure polyester, polyester-cotton, polyester-nylon, polyester-ammonia, polyester-containing blended products, etc., and a mass fraction of the polyester is 65%-99%.

Further, the metal salt compound includes Fe(OAc)₂, FeCl₂, Co(OAc)₂, CoCl₂, Ni(OAc)₂, NiCl₂, Cu(OAc)₂, or CuCl.

The OAc group refers to an acetoxy group or an acetate group, which is an abbreviation of CH₃COO⁻.

Further, the organic ligand containing N or P includes:

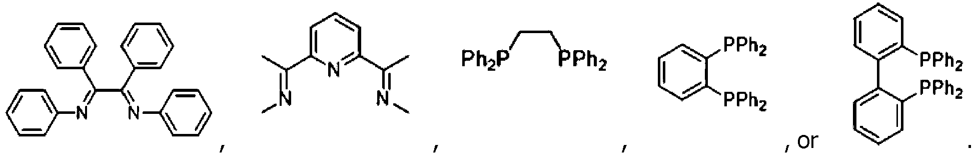

Further, a molar ratio of the metal salt compound to the organic ligand containing N or P in the catalyst is 1:(1.5-2).

Further, a condition of the hydrogen atmosphere is reacting under 1.01325-2.0265 MPa ((10-20 atm), (standard atmospheric pressure)) of hydrogen at 100-110°C for 10-60 min.

Further, a weight ratio of the catalyst to the elution waste liquid of polyester fabric is (0.1 wt%-1 wt%):1.

Further, the elution waste liquid of polyester fabric is a liquid obtained by mixing polyester fabric with an eluent for elution and separating.

A weight ratio of the polyester fabric to the eluent is 1:(10-20).

Further, the eluent is at least one of ethylene glycol, N,N-dimethylformamide, and dimethyl sulfoxide.

Further, a condition of the elution is heating at 120-150°C for 10-30 min.

The present disclosure also provides a use of the method for recovering the elution waste liquid of polyester fabric, comprising: applying the method to recover and reuse the elution waste liquid of polyester fabric containing azo dyes and anthraquinone dyes.

The present disclosure is based on the following principles:
The present disclosure utilizes the C-H bond of a chromogenic group of the dye to generate a new non-chromogenic group by a cross-coupling reaction in the presence of a catalyst. At the same time, the dye also undergoes a polymerization reaction to generate a cross-linked polymer, which is polymerized from a small molecule substance to a macromolecule substance, and precipitates from the elution waste liquid of polyester fabric containing a decolorizing agent, thereby realizing the separation of the dye and the eluent.

The specific reaction principle is as follows:
Hydrogen gas used in the present disclosure reduces the catalyst to a low-valent metal catalytic activity center M.

For the azo dyes: the N=N double bond of the dye is used to guide the low-valent metal catalytic active center M to undergo an oxidation-addition reaction with the aromatic hydrocarbon C-H bond to generate a metal-containing heterocyclic compound. Under heating conditions, the metal-containing heterocyclic compound further undergoes a series of complex chemical reactions, including C-C coupling and N=N bond reduction to generate a complex polymer. The reaction is as follows:

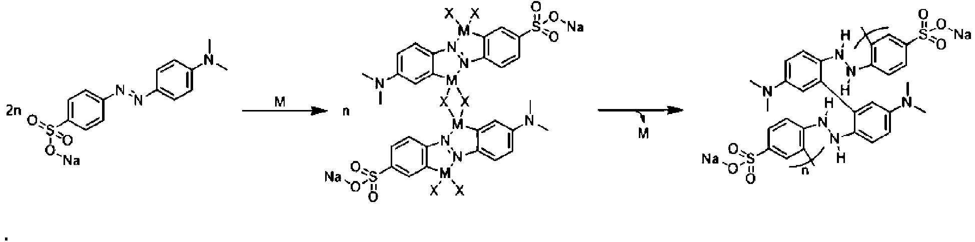

For the anthraquinone dyes: using the guiding effect of the carbonyl group C=O of the dye, an oxidation-addition reaction similar to the above occurs to generate a complex polymer, and the reaction is as follows:

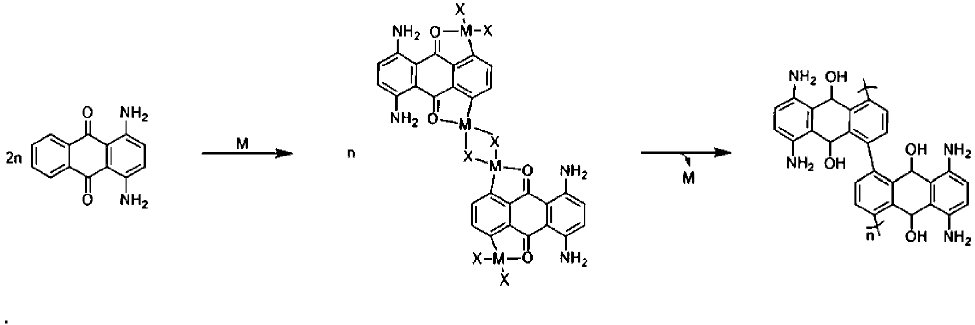

By adopting the above technical solution, the present disclosure has the following beneficial effects compared with the prior art:
(1) In the method for recovering the elution waste liquid of polyester fabric provided in the present disclosure, the catalyst generated by the in-situ reaction of the metal salt compound with the organic ligand containing N or P can react with the chromophore of the dyes to generate a colorless group, and the dyes also undergoes a polymerization reaction to generate a cross-linked polymer, which is precipitated from the elution waste liquid of polyester fabric, thereby achieving the purpose of separating the dyes extracted from the polyester fabric and dissolved in the elution waste liquid of polyester fabric from the eluent, realizing the rapid separation of the dyes and the eluent, and the recycling of the eluent, which has important economic value and environmental protection significance.
(2) The method for recovering the elution waste liquid of polyester fabric provided in the present disclosure can effectively remove the azo dyes and the anthraquinone dyes from the elution waste liquid of polyester fabric, and a decolorization rate of a recovered eluent on the polyester fabric reaches 99%.
(3) The method for recovering the elution waste liquid of polyester fabric provided in the present disclosure can be used for decolorizing waste polyester fabric such as automobile interiors, home textiles, clothing, building materials, and industrial consumer products.

### BRIEF DESCRIPTION OF THE DRAWINGS

The present disclosure will be further illustrated by way of drawings and exemplary embodiments.
FIG. 1 is a K/S value-wavelength diagram of an experimental group in example 1.
FIG. 2 is a K/S value-wavelength diagram of a control group in example 1.
FIG. 3 is a nuclear magnetic resonance (NMR) spectrum of the recovered polyester fabric eluent J1 in example 1.

### DETAILED DESCRIPTION

The present disclosure will be further illustrated by way of exemplary embodiments. It should be understood that the preferred embodiments described herein are used for illustrating and understanding the present disclosure only, and are not intended to limit the disclosure.

Materials, reagents, and the like used in the embodiments of the present disclosure are commercially available, if not otherwise indicated. The experimental manners in the embodiments for which specific conditions are not indicated are generally in accordance with conventional conditions, or in accordance with conditions recommended by the manufacturer.

### Example 1 A method for recovering an elution waste liquid of polyester fabric

The present example provided a method for recovering an elution waste liquid of polyester fabric, including the following steps in sequence.

S1, 1 kg of waste polyester fabric was subjected to alkaline washing and water washing for later use.

S2, the waste polyester fabric pretreated by S1 was mixed with 20 kg of an ethylene glycol eluent, heated and stirred at 140°C for 30 min for elution, and the polyester fabric was taken out and placed on the ethylene glycol eluent for 30 min to allow the eluent absorbed by the polyester fabric to drip back into the ethylene glycol eluent solution to obtain decolorized polyester fabric and an elution waste liquid of polyester fabric.

S3, 1 kg of the above elution waste liquid of polyester fabric was mixed with 1 g of a catalyst and reacted at 100°C under a hydrogen atmosphere of 1.01325 MPa (10 atm) for 60 min to obtain a polyester fabric eluent (marked as J1) and a dye precipitate (marked as R1), and the catalyst was generated by an in-situ reaction of Fe(OAc)₂ and 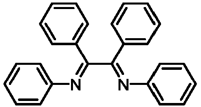 in a molar ratio of 1:2.

### Verification of effects

### (i) Comparative validation of recovery effects

The recovered polyester fabric eluent J1 obtained in this example was designated as an experimental group, and the ethylene glycol eluent was designated as a control group.

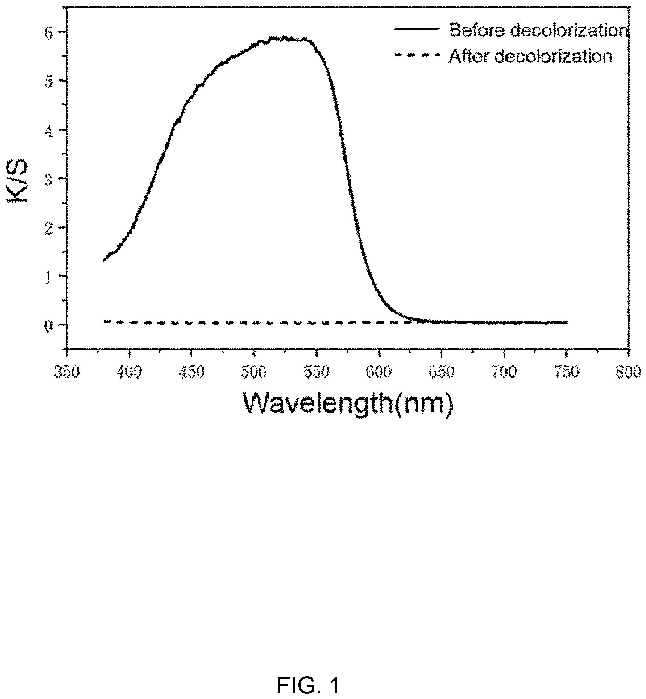

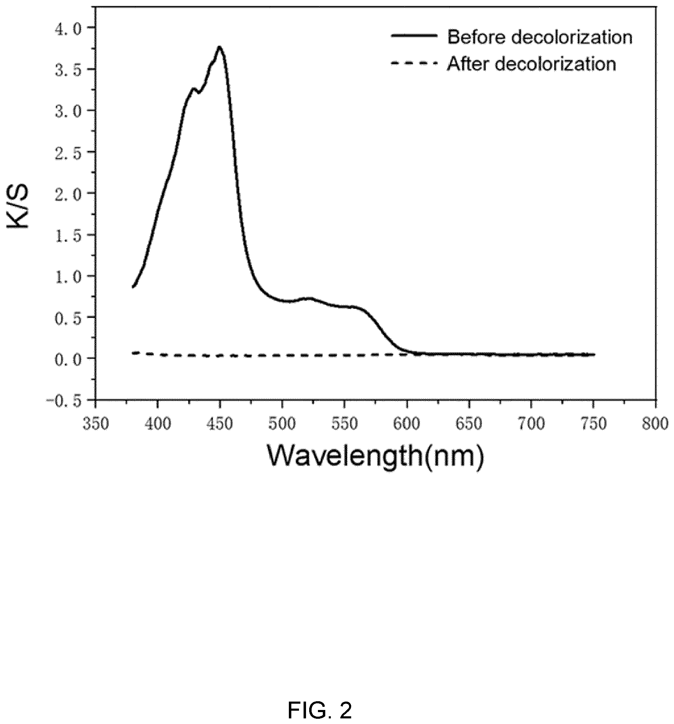

The above two groups were used for the decolorization of colored polyester fabric. A specific operation and a dosage of the decolorization were as described in Example 1. A decolorization effect was evaluated by the change of K/S value before and after decolorization of colored polyester fabric. The K/S value-wavelength diagram of the experimental group is shown in FIG. 1 and the K/S value-wavelength diagram of the control group is shown in FIG. 2. A decolorization rate is calculated by the following formula: 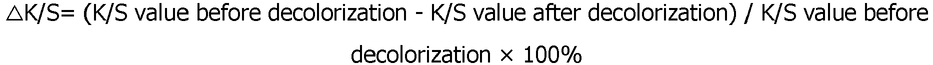 ΔK/S= (K/S value before decolorization - K/S value after decolorization) / K/S value before decolorization × 100%

According to the calculation, a decolorization rate of the experimental group is 99.32%, and a decolorization rate of the control group is 99.04%, which indicates that the recovered polyester fabric eluent obtained in this example has a good decolorization effect and can be recycled.

### (ii) Structural validation of the recovered polyester fabric eluent

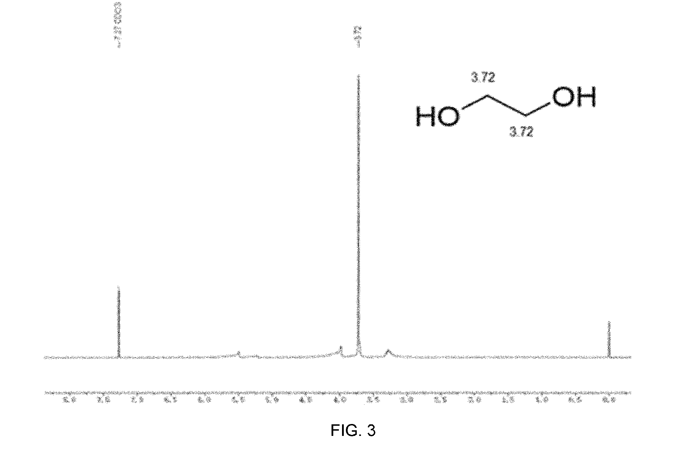

The recovered polyester fabric eluent J1 obtained in this example was subjected to nuclear magnetic resonance to verify the structure of J1. The NMR spectrum of J1 is shown in FIG. 3. As can be seen from FIG. 3, the recovered polyester fabric eluent J1 obtained in this example is pure ethylene glycol, indicating that the example of the present disclosure has a good recovery effect and can realize the recycling of the eluent.

### Example 2 A method for recovering an elution waste liquid of polyester fabric

The present example provided a method for recovering an elution waste liquid of polyester fabric, including the following steps in sequence.

S1, 1.5 kg of waste polyester fabric was subjected to alkaline washing and water washing for later use.

S2, the waste polyester fabric pretreated by S1 was mixed with 18 kg of a eluent mixture of ethylene glycol and dimethyl sulfoxide, heated and stirred at 135°C for 20 min for elution, and the polyester fabric was taken out and placed on the eluent mixture of the ethylene glycol and the dimethyl sulfoxide for 30 min to allow the eluent absorbed by the polyester fabric to drip back into the solution to obtain decolorized polyester fabric and an elution waste liquid of polyester fabric.

S3, 2 kg of the above elution waste liquid of polyester fabric was mixed with 4 g of a catalyst and reacted at 109°C under a hydrogen atmosphere of 1.41855 MPa (14 atm) for 35 min, to obtain a polyester fabric eluent and a dye precipitate (marked as R2), and the catalyst was generated by an in-situ reaction of CuCl and 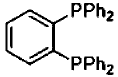 in a molar ratio of 1:1.7.

### Examples 3-8 Methods for recovering an elution waste liquid of polyester fabric

Examples 3-8 provided respectively a method for recovering an elution waste liquid of polyester fabric, the contents of which were basically the same as those of example 1, except for specific components and process parameters, as shown in Table 1:

For types of eluents, ethylene glycol, N,N-dimethylformamide, and dimethyl sulfoxide were marked with the codes a, b, and c, respectively.

In the catalyst, the organic ligand containing N or P 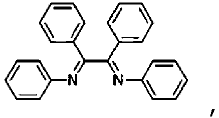 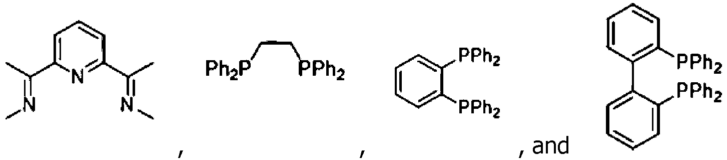 were marked with codes p, q, x, y, and z, respectively.

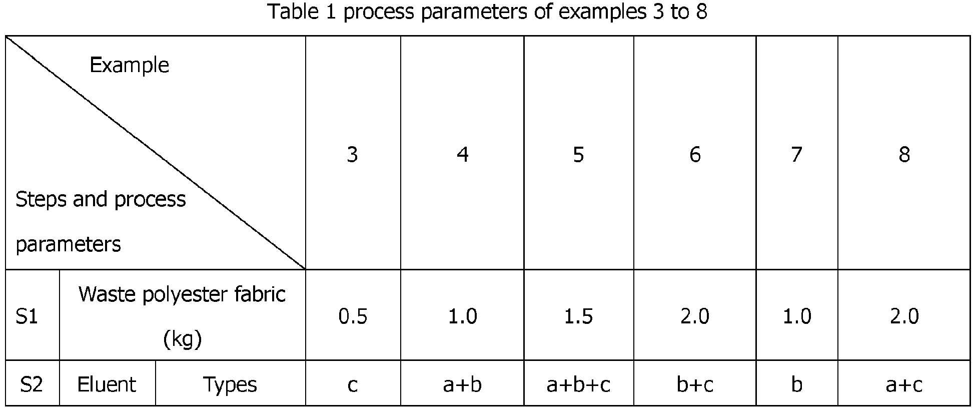

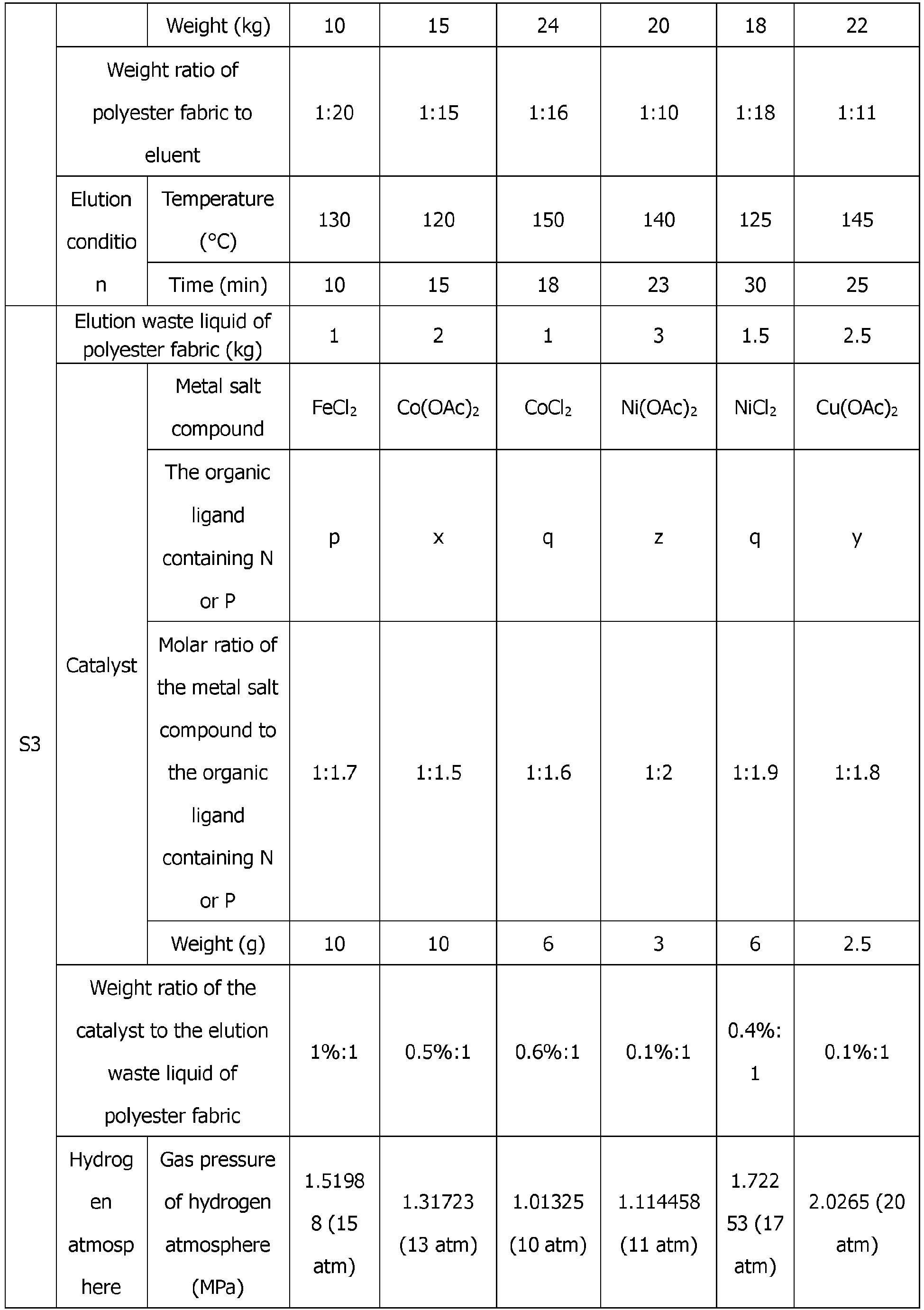

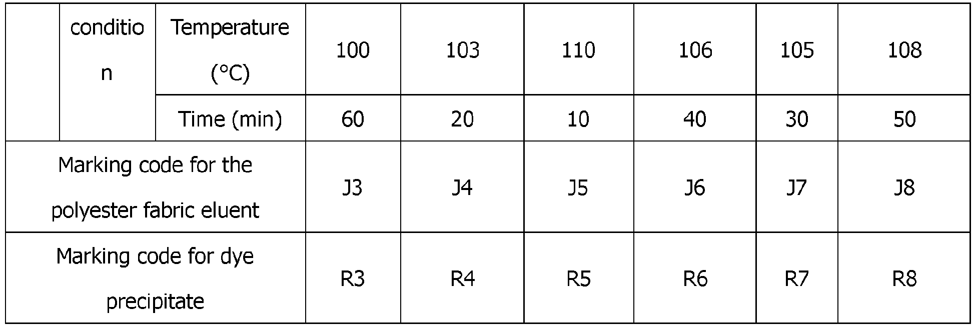

The decolorization effect and the recovery effect of the polyester fabric eluents J3-J8 obtained in examples 3-8 on colored polyester fabric are similar to those in example 1.

### Example 9 A use of the method for recovering the elution waste liquid of polyester fabric

The present example provided a use of the method for recovering the elution waste liquid of polyester fabric. The elution waste liquid of polyester fabric was mixed with a catalyst and reacted under a hydrogen atmosphere to obtain a polyester fabric eluent and a dye precipitate. The filtered polyester fabric eluent may be used in the next cycle of polyester fabric decolorization.

## Claims

1. A method for recovering an elution waste liquid of polyester fabric, comprising:
mixing the elution waste liquid of polyester fabric with a catalyst, performing a dye curing reaction under a hydrogen atmosphere, and performing a separation operation to obtain a separated liquid, which is a polyester fabric eluent,
wherein the catalyst is generated by an in-situ reaction of a metal salt compound with an organic ligand containing N or P.

2. The method of claim 1, wherein the metal salt compound includes Fe(OAc)₂, FeCl₂, Co(OAc)₂, CoCl₂, Ni(OAc)₂, NiCl₂, Cu(OAc)₂, or CuCl.

3. The method of claim 1 or claim 2, wherein the organic ligand containing N or P includes: 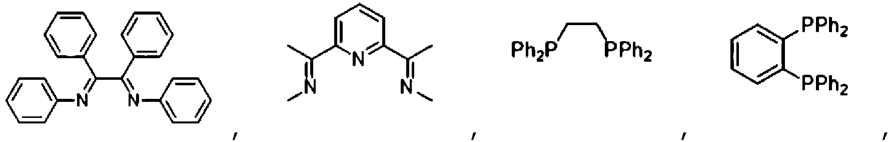 or

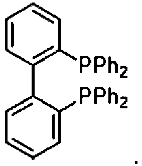

4. The method of claim 3, wherein a molar ratio of the metal salt compound to the organic ligand containing N or P in the catalyst is 1:(1.5-2).

5. The method of claim 1 or claim 4, wherein a condition of the hydrogen atmosphere is reacting under 1.01325-2.0265 MPa (10-20 atm) of hydrogen at 100-110°C for 10-60 min.

6. The method of claim 5, wherein a weight ratio of the catalyst to the elution waste liquid of polyester fabric is (0.1 wt%-1 wt%):1.

7. The method of claim 1 or claim 6, wherein the elution waste liquid of polyester fabric is a liquid obtained by mixing polyester fabric with an eluent for elution and separating,

8. The method of claim 7, wherein a weight ratio of the polyester fabric to the eluent is 1:(10-20).

9. The method of claim 7 or claim 8, wherein the eluent is at least one of ethylene glycol, N,N-dimethylformamide, and dimethyl sulfoxide.

10. The method of claim 9, wherein a condition of the elution is heating at 120-150°C for 10-30 min.

11. A use of the method for recovering the elution waste liquid of polyester fabric of any one of claims 1-10, comprising: applying the method to recover and reuse the elution waste liquid of polyester fabric containing azo dyes and anthraquinone dyes.

## Patentansprüche

1. Verfahren zur Rückgewinnung einer Elutionsabfallflüssigkeit eines Polyestergewebes, umfassend:
Mischen der Elutionsabfallflüssigkeit des Polyestergewebes mit einem Katalysator, Durchführen einer Farbstofffixierungsreaktion unter einer Wasserstoffatmosphäre und Durchführen eines Trennvorgangs, um eine getrennte Flüssigkeit zu erhalten, welche ein Elutionsmittel für Polyestergewebe ist,
wobei der Katalysator durch eine In-situ-Reaktion einer Metallsalzverbindung mit einem N- oder P-haltigen organischen Liganden erzeugt wird.

2. Verfahren nach Anspruch 1, wobei die Metallsalzverbindung Fe(OAc)₂, FeCl₂, Co(OAc)₂, CoCl₂, Ni(OAc)₂, NiCl₂, Cu(OAc)₂ oder CuCl umfasst.

3. Verfahren nach Anspruch 1 oder Anspruch 2, wobei der N- oder P-haltige organische Ligand Folgendes umfasst: 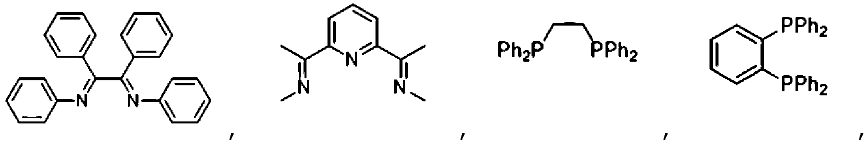 oder

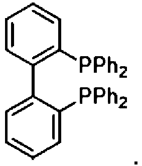

4. Verfahren nach Anspruch 3, wobei ein molares Verhältnis der Metallsalzverbindung zu dem N- oder P-haltigen organischen Liganden im Katalysator 1:(1,5-2) beträgt.

5. Verfahren nach Anspruch 1 oder Anspruch 4, wobei die Bedingung der Wasserstoffatmosphäre darin besteht, die Reaktion unter 1,01325-2,0265 MPa (10-20 atm) Wasserstoff bei 100-110 °C für 10-60 min durchzuführen.

6. Verfahren nach Anspruch 5, wobei ein Gewichtsverhältnis des Katalysators zu der Elutionsabfallflüssigkeit des Polyestergewebes (0,1 Gew.-%-1 Gew.-%):1 beträgt.

7. Verfahren nach Anspruch 1 oder Anspruch 6, wobei die Elutionsabfallflüssigkeit des Polyestergewebes eine Flüssigkeit ist, die durch Mischen eines Polyestergewebes mit einem Elutionsmittel zur Elution und anschließende Trennung erhalten wird.

8. Verfahren nach Anspruch 7, wobei ein Gewichtsverhältnis des Polyestergewebes zu dem Elutionsmittel 1:(10-20) beträgt.

9. Verfahren nach Anspruch 7 oder Anspruch 8, wobei das Elutionsmittel mindestens eines von Ethylenglykol, N,N-Dimethylformamid und Dimethylsulfoxid ist.

10. Verfahren nach Anspruch 9, wobei die Bedingung der Elution ein Erhitzen bei 120-150 °C für 10-30 min umfasst.

11. Verwendung des Verfahrens zur Rückgewinnung der Elutionsabfallflüssigkeit eines Polyestergewebes nach einem der Ansprüche 1 bis 10, umfassend:
Anwenden des Verfahrens zur Rückgewinnung und Wiederverwendung der Elutionsabfallflüssigkeit des Polyestergewebes, die Azofarbstoffe und Anthrachinonfarbstoffe enthält.

## Revendications

1. Procédé de récupération d'un liquide de déchets d'élution de tissu en polyester, comprenant :
mélanger le liquide de déchets d'élution de tissu en polyester avec un catalyseur, effectuer une réaction de fixation du colorant sous une atmosphère d'hydrogène, et effectuer une opération de séparation afin d'obtenir un liquide séparé, lequel est un éluant de tissu en polyester,
dans lequel le catalyseur est généré par une réaction in situ d'un composé de sel métallique avec un ligand organique contenant N ou P.

2. Le procédé selon la revendication 1, dans lequel le composé de sel métallique comprend Fe(OAc)₂, FeCl₂, Co(OAc)₂, CoCl₂, Ni(OAc)₂, NiCl₂, Cu(OAc)₂, or CuCl.

3. Le procédé selon la revendication 1 ou la revendication 2, dans lequel le ligand organique contenant N ou P comprend : 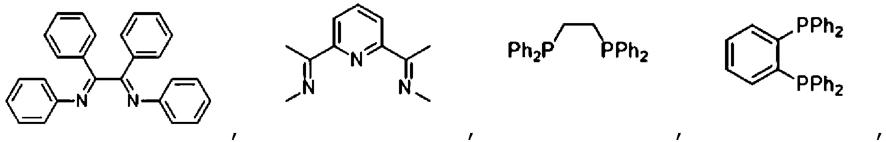 ou

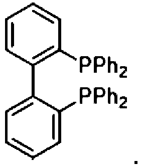

4. Le procédé selon la revendication 3, dans lequel un rapport molaire du composé de sel métallique au ligand organique contenant N ou P dans le catalyseur est de 1:(1.5-2).

5. Le procédé selon la revendication 1 ou la revendication 4, dans lequel une condition de l'atmosphère d'hydrogène consiste à effectuer la réaction sous 1,01325-2,0265 MPa (10-20 atm) d'hydrogène à 100-110 °C pendant 10-60 min.

6. Le procédé selon la revendication 5, dans lequel un rapport en poids du catalyseur au liquide de déchets d'élution de tissu en polyester est de (0,1 % en poids-1 % en poids):1.

7. Le procédé selon la revendication 1 ou la revendication 6, dans lequel le liquide de déchets d'élution de tissu en polyester est un liquide obtenu en mélangeant un tissu en polyester avec un éluant pour l'élution et en effectuant une séparation.

8. Le procédé selon la revendication 7, dans lequel un rapport en poids du tissu en polyester à l'éluant est de 1:(10-20).

9. Le procédé selon la revendication 7 ou la revendication 8, dans lequel l'éluant est au moins l'un parmi l'éthylène glycol, le N,N-diméthylformamide et le diméthylsulfoxyde.

10. Le procédé selon la revendication 9, dans lequel la condition de l'élution consiste en un chauffage à 120-150 °C pendant 10-30 min.

11. Utilisation du procédé de récupération du liquide de déchets d'élution de tissu en polyester selon l'une quelconque des revendications 1 à 10, comprenant :
appliquer le procédé afin de récupérer et de réutiliser le liquide de déchets d'élution de tissu en polyester contenant des colorants azoïques et des colorants anthraquinoniques.
